# EUROPEAN PATENT APPLICATION

(11) **EP 2 259 124 A1**
(43) Date of publication of application: **08.12.2010**
(21) Application number: 09275040.5
(22) Date of filing: 02.06.2009
(51) Int. Cl.: G02B 27/01, B64D 10/00

(54) **Communication apparatus**

(71) Applicant: BAE Systems PLC, 6 Carlton Gardens London SW1Y 5AD (GB)
(72) Inventor: The designation of the inventor has not yet been filed

(57) **Abstract**

Communication apparatus for communicating data between a processor on board a vehicle and a display for a user of the vehicle is disclosed. The apparatus comprises a first light source operable to generate a modulated output representative of the data, a first receiver for receiving the modulated output of the first light source; and means for communication between the receiver and the display. The first receiver is mounted on a suit worn by the user in operation of the vehicle. The communication apparatus is expected to be applicable, for example, with head-mounted displays used by pilots of aircraft.

## Description

This invention relates to communication apparatus. More particularly, this invention relates to communication apparatus in vehicles, of the type used for communicating data between a processor on board the vehicles, and a user of the vehicles, via, for example, a head-mounted display.

Such types of communication apparatus are known, particularly in airborne vehicles, where pilots are often provided with head-mounted displays that provide information to the pilot in the form of symbology presented over the pilot's normal view. Thus, the pilot might be able to see the airspeed of the vehicle without distracting attention from the view of the outside world. In order to communicate such information to the pilot, via the head-mounted display, it has previously been necessary to provide an 'umbilical' cable that communicates between the pilot's helmet, and the vehicle. Information is transmitted along the umbilical from the vehicle processor to the head-mounted display, and thus can be communicated to the pilot.

A number of problems exist with such umbilicals. It is necessary to ensure that the pilot can easily exit the vehicle in the event of an emergency. In some military aircraft, the pilot must be able to safely eject from the cockpit in the event of an emergency. In such scenarios, it is important that the umbilical, which physically connects the pilot to the vehicle, is easily severed. Thus, umbilicals often comprise a plug-and-socket arrangement that the pilot connects on entering the vehicle, and that is arranged to disconnect when the pilot exits. Quick-release systems, that can be costly, are also often necessary where the pilot may be ejected. These considerations result in current umbilical systems being bulky, and in their connectors being sensitive to vibration.

It is accordingly an aim of the present invention to overcome, or at least partially mitigate, the above-mentioned problems. It is a further aim of the present invention to provide communication apparatus suitable for communicating between a wider range of vehicles, including airborne vehicles, and ground-based or other vehicles, and users of these vehicles. A yet further aim of the present invention is to enable such communication not only when the user is within the vehicle, but also when the user is performing tasks within a short range of the vehicle.

In accordance with a first aspect of the present invention, there is provided communication apparatus for communicating data between a processor on board a vehicle and a display for a user of the vehicle, the user wearing a suit, and the apparatus comprising: a first light source operable to generate a modulated output representative of the data; a first receiver on the suit for receiving the modulated output of the first light source; and a cable for communication between the receiver and the display, a first length of the cable being attached to the suit. The receiver and display are therefore separated, enabling the display to be located where necessary for the particular application, and the receiver to be located where necessary for consistent communication with the light source.

The suit, in one embodiment described in detail below, is a pilot's flightsuit. It will however be appreciated that the term is used herein to refer to any article worn on the body of the user of the vehicle. For example, the receiver may be worn on a strap which the user can attach to a wrist, or ankle, or other body part, and connected to the cable using a plug and socket arrangement. Similarly, the receiver may be mounted on a harness that secures the user in position in use of the vehicle. It is not considered preferable for the receiver to be mounted on the user's head, since the head is likely to require a large degree of freedom of movement, making consistent communication difficult.

In a preferred embodiment, the first receiver is mounted on the suit at a point which, in operation of the vehicle, is generally stationary. In this way, consistent communication can be achieved without it being necessary to compensate for movements of the user in flight. The display may be a head-mounted display. Head-mounted displays are commonly used in aircraft, but pilots and passengers may often move their heads, rendering consistent free-space communication links difficult without the benefit of the present invention.

The cable may be split into a first part and a second part, which parts are linked such that the user can remove the head-mounted display independently of the suit. It is considered advantageous for the user to be able to remove the display relatively easily. For example, where the display is helmet-mounted, a simply plug and socket arrangement may suffice. In contrast to prior known umbilical systems, quick-release connections, although convenient, are not necessary for safety reasons, since the user need not remove the helmet in order to leave the vehicle.

In one embodiment, the first and second parts of the cable are linked by a plug-and-socket arrangement. Alternatively, the cable may terminate at a second light source operable to generate a modulated output representative of the data; and wherein a second receiver attached to the head-mounted display is arranged to receive the modulated output of the second light source and to communicate the data to the head-mounted display. There may be a plurality of second receivers mounted on the display.

A retroreflector may be provided adjacent to the first receiver, the retroreflector being operable to retroreflect a modulated version of a signal received from the first light source. Use of specific modulation enables the on-board processor to confirm that a signal is being received by an appropriate user, and may be sufficient to communicate low-bandwidth data back to the vehicle. This may be particularly useful where the user is operating outside of the vehicle. In one embodiment, the retroreflector can be vibrated to modulate the signal.

The first light source may be mounted adjacent a further receiver, and the first receiver may be mounted adjacent a further light source; and the apparatus may be arranged for two-way communication between the user and the processor on board the vehicle. It is anticipated that such two-way communication will be useful, allowing users to speak to each other without the need for additional communication channels.

In accordance with a second aspect of the present invention, there is provided a suit for a user of a vehicle, the suit being arranged such that the user can receive information via a display, and the suit comprising: a receiver operable to receive a modulated optical signal representative of the data; a cable attached to the suit and communicating between the receiver and a termination arranged for connection to the display. In most cases, it is expected that the display will be a body-mounted display. For example, the display may be a head-mounted display, or may be a hand-held display.

The receiver may be mounted on the suit at a point which, in operation of the vehicle by the user, remains generally stationary. For example, the receiver may be mounted at a point on a region of the suit, the region being selected from the group consisting of: the belt region, the shoulder region, the wrist region, and the ankle region.

In accordance with a third aspect of the present invention, there is provided a vehicle comprising a vehicle processor and a light source operable to generate a modulated signal representative of data to be communicated to a user of the vehicle, the light source being directed towards a point which, in operation of the vehicle, is located on the user, and remains generally stationary.

There follows a description of a number of specific embodiments of the present invention, which embodiments are in all respect exemplary, and which will be described with reference to the accompany drawings, in which:
Figure 1 is a schematic illustration of communication apparatus in accordance with a first embodiment of the invention in use to provide a pilot of an aircraft with information through a helmet-mounted display;
Figure 2 is a schematic illustration of communication apparatus in accordance with a second embodiment of the invention in use to provide information to a pilot or passenger of a helicopter through a helmet-mounted display, when the pilot or passenger is working outside the helicopter.
Figure 3 is a schematic illustration of communication apparatus in accordance with a third embodiment of the invention in use to provide information to a pilot of an aircraft with information through a helmet mounted display.

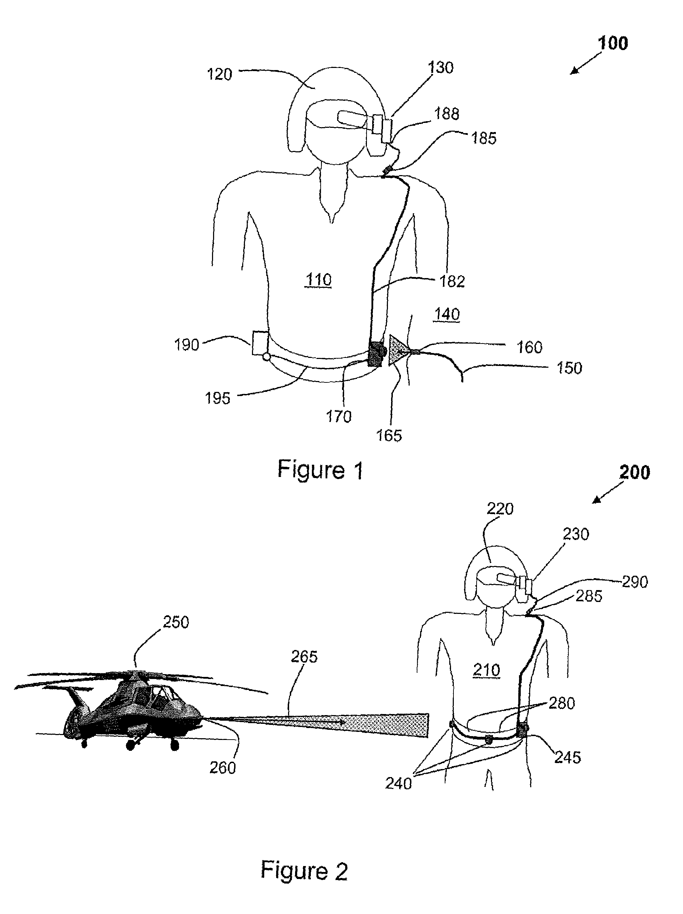

Referring firstly to Figure 1, there is illustrated communication apparatus in accordance with a first embodiment of the present invention. As illustrated, the apparatus is in use by a pilot 100 of a helicopter. The pilot is wearing a flightsuit 110, and a helmet 120 on which is mounted a helmet-mounted display 130. The pilot is seated in seat 140. Seat 140 is only partially illustrated in Figure 1 for the purposes of clarity. The helmet-mounted display 130 presents information to the pilot that is received from the helicopter's avionics central processing unit. Such information may include navigational information, relating to orientation of the helicopter or its airspeed, video data from night-vision cameras, or other information relevant to a particular operation being performed by the helicopter and its crew.

Data is transmitted from the avionics central processing unit via a cable 150 to a laser device 160 mounted on the seat 140. It will be appreciated that either optical or electrical cables could be used for such transmission. The laser device comprises a semiconductor laser that emits a beam 165 that is modulated so as to be representative of the data transmitted by the avionics central processing unit. In the present embodiment, the laser device emits a beam at a wavelength of 980 nm that has an average power selected to be less than aproximately 100 mW, in order to minimise power consumption, and to mitigate any potential safety risks. Beam 165 is received by a receiver 170 mounted on the pilot's flightsuit 110.

The configuration of the laser and the receiver is selected such that the laser and the receiver are consistently in alignment with each other during flight of the helicopter, such that, when required, data can be communicated between the pilot's head mounted display 130 and the vehicle's avionics central processing unit. Thus, it is preferred that the receiver is located on the flightsuit 110 at a point which remains relatively stationary during flight. Such points on the flightsuit correspond to parts of the body that need not be moved, or that cannot move, during flight whilst the pilot is seated. One such area is the belt area of the pilot's flightsuit 110, which is expected to remain relatively stationary even when the pilot's head or upper body must move in order to maintain control of the helicopter. The laser device 160 is located on a corresponding part of the pilot's seat.

Physical barriers included in the seat are used to ensure that there is an appropriate separation between the laser device and the receiver. A separation of between about 5 cm and about 15 cm is considered preferable, mitigating any potential safety problems, and ensuring that a sufficiently strong signal reaches the receiver whilst avoiding receiver saturation. In the present embodiment, a separation of about 10 cm is used. In order to account for any possible movement of the belt area of the flightsuit, the laser device 160 is configured such that the beam diverges to a diameter of approximately 20 cm on the pilot's belt area. The size of this area is selected to ensure that the received power is sufficiently high to ensure reliable communication, and that the receiver consistently remains within the area covered by the laser beam, regardless of the pilot's movements.

Receiver 170 comprises a silicon photodetector, an optical collection element or optical antenna used to direct light towards the photodetector, and integrated electronics to convert the optical signal into the electrical domain, and perform the processing necessary to encode the data in accordance with the protocol used. In the present embodiment, a Fast Ethernet protocol is used, but it will be noted that many other data protocols could be used. It is preferable that the protocol used is able to translate effectively into the optical domain (hence, it is not currently considered desirable to use three-level protocols). The signal output from the receiver is an electrical signal modulated in accordance with the selected protocol so as to represent the data to be communicated to the helmet-mounted display.

A cable communicates between the output of the receiver 170 and the helmet mounted display 130. In the present embodiment, the cable is a jacketed copper cable in two parts joined by a connector 185 located on the shoulder area of the pilot's flightsuit 110. A first part 182 of the cable is threaded inside the lining of the pilot's flightsuit 110 to the connector 185 on the shoulder area of the flight suit. A second, shorter part 188 of the cable leads from the connector 185 to the helmet mounted display 130, which then displays the information to the pilot. Connector 185 is included in the cable such that the pilot can easily take off the helmet. It will be noted that the requirements for 185 are considerably less demanding than those of a quick-release connector used on prior-known umbilical cables, since there is no need for connector 185 to break apart on ejection of the pilot from the aircraft. Connector 185 comprises two parts that can be disconnected via a manual release mechanism. Disconnection of such a manual-release mechanism is similar in convenience for the user to the removal of a chin-strap when removing a current helmet model. The length of the second part 188 of the cable is selected to allow sufficient movement of the pilot's head during flight.

The receiver 170 and the helmet mounted display 130 are powered using a battery pack 190 mounted onto the pilot's flight suit in the belt area. Cable 195 is threaded through the lining of the pilot's flightsuit from the battery pack to the receiver, to provide power to the receiver. Power to the helmet mounted display is provided from a further cable, split from cable 195, which is threaded with cable 182 through the lining of the flight suit to the connector 185 on the shoulder area of the flight suit. The power cable for the helmet mounted display can then be integrated with cable 188 that leads from the connector 185 to the helmet-mounted display 130.

A second embodiment of the invention, not illustrated in the accompanying drawings, is similar to the first embodiment of the invention except in that communication between the shoulder area of the flight suit and the helmet mounted display is achieved by a free space optical link, rather than by a cable leading from the shoulder area directly to the helmet mounted display. The free space optical link comprises a laser device as described above with reference to the first embodiment, but directed towards the lower part of the pilot's helmet. A number of receivers are positioned around the lower part of the pilot's helmet, so that at least one of the receivers is able to receive the output of the laser device regardless of the position of the pilot's head. Additional processing electronics are used to distinguish between the signals received at each of the receivers such that only the strongest signal is processed and transmitted to the helmet-mounted display. A copper cable is integrated into the helmet to transmit data from the receivers to the helmet mounted display. Low-weight batteries are placed in the helmet to power the receivers mounted on the helmet, and the helmet-mounted display.

A third embodiment of the present invention is illustrated in Figure 2. The third embodiment of the invention has been devised for use where it is necessary for the pilot, passenger or other user of a vehicle, to operate outside of the vehicle, within a relatively short distance thereof. As shown in Figure 2, a user 200 of a helicopter 250 is operating outside of the helicopter. User 200 is wearing a flighsuit 210, and a helmet 220 on which is provided a helmet mounted display 230. Four receivers 240 are distributed evenly around the belt of the user's flightsuit, each linked to a single electronics unit 245 also worn on the belt of the user's flightsuit. Power for the receivers, electronics unit and helmet mounted display is provided by a battery pack provided on the user's belt, but not illustrated in Figure 2.

A laser 260 is mounted on the exterior of the helicopter and directed towards the user's belt area. Laser 260 is operable to emit a modulated beam 265 at a wavelength of 980 nm in order to communicate with the user 200 when the user is outside of the vehicle. The laser 260 receives data for communication to the user 200 from the avionics central processing unit on the helicopter. Data transmitted may include for example video data, symbology, audio information, or schematics. The power and divergence of the beam 265 emitted by laser 260 are selected in dependence on how far away from the helicopter the user is expected to operate. In an exemplary application, the user may be expected to remain within a distance of approximately 100 m of the helicopter, and the beam has a divergence of approximately 5 mrad and a power of less than approximately 2.5 W. Generally, the power of the beam will be higher than, and the divergence of the beam will be less than, the corresponding beam used for communication in the first embodiment of the invention described above.

Means are also provided to allow the laser to track the position of the user 200. In the present embodiment, each of the receivers 240 is provided with a retroreflector that can be vibrated, and a further receiver is mounted on the helicopter 250 next to the laser 260. The vibrations of the retroreflector are controlled by an electrical signal received from the electronics unit 245, so that a modulated signal is reflected back towards the laser 260 on the helicopter, and received by the receiver mounted adjacent to the laser 260. This signal is then used to track the user 200, such that the beam emitted by laser 260 tracks the receivers 240 on the user's belt. The modulated signal is also used for low-bandwidth communications from the user to the helicopter. For example, the modulated signal can be used for transmitting an audio signal back to the helicopter, such that the user can orally communicate to a controller or pilot remaining on the helicopter.

Data received at the receivers 240 is communicated to the helmet mounted display in a manner similar to that described above with respect to the first embodiment of the invention. Cables are attached to the belt of the flightsuit 210 to communicate between the receivers 240 and the electronics unit 245. Each receiver converts the optical signal received from the laser 260 to an electrical signal in accordance with a selected data protocol, and communicates this electrical signal to the electronics unit. The electronics unit selects the highest strength signal, processes that signal, and outputs the electrical signal. The signal is then communicated along cable 280 fixed within the material of the flightsuit 210 to a quick-release connector 285 mounted on the shoulder-area of the flightsuit. A further short length of cable 290 then communicates between connector 285 and the helmet mounted display 230. Quick-release connector 285 is provided such that the user can easily remove the helmet 220; and in an alternative embodiment, may be replaced by a free space optical link as described above with respect to the second embodiment. Thus information can be communicated from the helicopter 250 to the user 200.

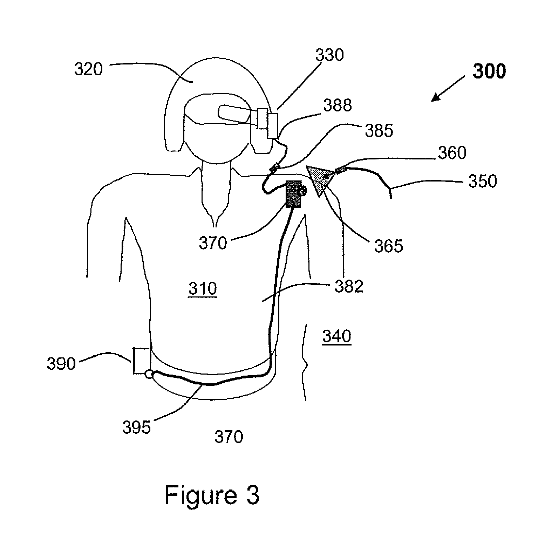

A fourth embodiment of the invention is schematically illustrated in Figure 3. The fourth embodiment is similar to the first embodiment, except in the mounting of the receiver. Elements in Figure 3 are referenced with the same numerals used in Figure 1, but incremented by two hundred. In the fourth embodiment, the receiver 370 is mounted on the shoulder area of the flightsuit, rather than on the belt area of the flightsuit. The shoulder area of the flightsuit is also expected to remain generally stationary, with respect to the seat, during operation of a vehicle. The light source 360 is mounted on a corresponding part of the pilot's seat, closely adjacent, in flight, to the pilot's shoulder, and emits a modulated beam of light 365 so as to communicate with the receiver 370.

A fifth embodiment of the invention, not illustrated in the accompanying Figures, is also similar to the first embodiment, except in that the receiver is not mounted on the belt area of the flightsuit, but on the ankle region of the flight suit. The ankle region of the flight suit is also expected to remain relatively stationary during operation of the vehicle.

A sixth embodiment of the invention, also not illustrated in the accompanying drawings, is similar to the third embodiment of the invention described above, except in the manner in which the user receives information. In the sixth embodiment, the helmet-mounted display of the third embodiment is replaced by a hand-held display. Information is transmitted to the user in the same manner as described above with respect to the third embodiment. Once processed by the receiving integrated electronics, the signal is passed along a cable attached within the user's flightsuit leading to the wrist area. At that point, a quick-release connector is provided to link to a short cable leading to the hand-held display. The quick-release connector enables the display to be easily detached.

Further embodiments of the invention are envisaged. In particular, it is noted that, whilst, in the above, it has been described to apply the invention to the problem of communication to a pilot or other user of a helicopter, it is envisaged that the invention will find application in communications with operators or passengers of other types of vehicles. For example, a similar need for communication via a helmet-mounted display exists for pilots of many types of military aircraft. The skilled reader will appreciate, however, that the invention could readily be applied to communications to any operator or passenger of a diverse number of types of vehicles, where that operator or passenger has a requirement for communication via a helmet-mounted display. Similar requirements are envisaged for tank operators, for example.

Moreover, the skilled reader will appreciate that it will be desirable to enable two-way communication between the user and the vehicle. Such two-way communication can be used to enable a number of users of the vehicle to talk to one another. For two-way communication to be achieved, each receiver is provided with an associated light source that can be used to transmit a modulated signal. The associated light source is mounted closely adjacent to the receiver, and integrated electronics are provided in order to process signals for transmission and to process signals received. Correspondingly, each light source is provided with an associated receiver. In order for oral communication to be achieved, the users are provided with an earpiece and microphone attached to the head-mounted display. In the case where only a hand-held display is provided, separate headsets having earpiece and microphone are also provided. Such two way communication will be particularly advantageous for use in vehicles where the noise levels are too high for normal conversations to take place, and will also be advantageous where vehicle users are operating at some distance from the vehicle.

Many variations and modifications of the above-described embodiments are possible, and will be obvious to those skilled in the art in the light of the above description. For example, other data protocols, such as serial DVI, or gigabit Ethernet, could be used in place of the Fast Ethernet protocol described above. It may be desirable to define a specific protocol for a particular application. Moreover, a number of different light sources, such as light-emitting diodes, could be used in place of the above-described lasers. It will also be appreciated that the cable linking the receiver to the display may be one of a number of different types of cable: whilst, in the above, it has been described to use jacketed copper cable, it will be noted that, for example, optical fibres could also be used to carry the data, with an additional power source on the helmet for the display, or with an additional copper cable to provide power from one belt-mounted battery pack. Many other such variations and modifications are possible without going beyond the scope of the present invention, which is defined in the accompanying claims.

## Claims

1. Communication apparatus for communicating data between a processor on board a vehicle and a display for a user of the vehicle, the user wearing a suit, and the apparatus comprising:
(a) a first light source operable to generate a modulated output representative of the data;
(b) a first receiver on the suit for receiving the modulated output of the first light source; and
(c) means for communication between the receiver and the display.

2. Communication apparatus as claimed in claim 1, wherein the means for communication comprise a cable, a first length of the cable being attached to the suit.

3. Communication apparatus as claimed in claim 1 or claim 2, wherein the first receiver is mounted on the suit at a point which, in operation of the vehicle, is generally stationary.

4. Communication apparatus as claimed in any one of claims 1 to 3, wherein the display is a head-mounted display.

5. Communication apparatus as claimed in claim 4 when dependent on claim 2, wherein the cable is split into a first part and a second part, which parts are linked such that the user can remove the head-mounted display independently of the suit.

6. Communication apparatus as claimed in claim 4 when dependent on claim 2, wherein the first and second parts of the cable are linked by a plug-and-socket arrangement.

7. Communication apparatus as claimed in claim 4 when dependent on claim 2, wherein the cable terminates at a second light source operable to generate a modulated output representative of the data; and wherein a second receiver attached to the head-mounted display is arranged to receive the modulated output of the second light source and to communicate the data to the head-mounted display.

8. Communication apparatus as claimed in any one of the preceding claims, wherein a retroreflector is provided adjacent to the first receiver, the retroreflector being operable to retroreflect a modulated version of a signal received from the first light source.

9. Communication apparatus as claimed in any preceding claim, wherein the first light source is mounted adjacent a further receiver, and wherein the first receiver is mounted adjacent a further light source; and wherein the apparatus is arranged for two-way communication between the user and the processor on board the vehicle.

10. A suit for a user of a vehicle, the suit being arranged such that the user can receive data from a processor on board the vehicle via a display, and the suit comprising:
(a) a receiver operable to receive a modulated optical signal representative of the data;
(b) means for communicating the received data to the display.

11. A suit as claimed in claim 10, wherein the means for communicating comprise a cable communicating between the receiver and a termination for connection to the display.

12. A suit as claimed in claim 10 or claim 11, wherein the termination comprises a light source operable to generate a modulated optical output; the output being directable towards a further receiver mounted on the display.

13. A suit as claimed in any one of claims 10 to 12, wherein the display is a head-mounted display.

14. A suit as claimed any one of claims 10 to 13, wherein the receiver is mounted on the suit at a point which, in operation of the vehicle by the user, remains generally stationary.
